# EUROPÄISCHE PATENTSCHRIFT

(11) **EP 0 425 613 B1**
(45) Veröffentlichungstag und Bekanntmachung des Hinweises auf die Patenterteilung: **11.08.1993**
(21) Anmeldenummer: 90906227.5
(22) Anmeldetag: 25.04.1990
(51) Int. Cl.: B60S 1/02, F04D 15/00, B60S 1/48

(54) **DOPPELFÖRDERPUMPE, INSBESONDERE FÜR SCHEIBENWASCHANLAGEN IN KRAFTFAHRZEUGEN**
DOUBLE-ACTING PUMP, IN PARTICULAR FOR WINDSCREEN WIPER SYSTEMS IN MOTOR VEHICLES
POMPE A DOUBLE ACTION, NOTAMMENT POUR LAVE-GLACE DANS DES VEHICULES A MOTEUR

(30) Priorität: 29.04.1989 DE 3914228
(43) Veröffentlichungstag der Anmeldung: 08.05.1991
(73) Patentinhaber: SWF Auto-Electric GmbH, D-74307 Bietigheim-Bissingen (DE)
(72) Erfinder: EGNER-WALTER, Bruno, D-7100 Heilbronn (DE); PLEISS, Eberhard, D-7598 Lauf (DE)
(74) Vertreter: Portwich, Peter
(86) Internationale Anmeldenummer: EP9000665
(87) Internationale Veröffentlichungsnummer: WO9013460

(56) Entgegenhaltungen:
- EP-A- 128 446
- EP-A- 234 802
- DE-A- 3 430 653
- DE-A- 3 729 025
- DE-U- 8 620 253
- GB-A- 2 202 133

## Beschreibung

Die Erfindung bezieht sich auf eine Doppelförderpumpe, die insbesondere als Pumpe für Scheibenwaschanlagen in Kraftfahrzeugen verwendet wird und die Merkmale aus dem Oberbegriff des Anspruchs 1 aufweist.

Aus der DE-A 35 32 580 (Fig. 6 und 7) ist eine Pumpe dieser Art bekannt, die drehrichtungsabhängig Waschflüssigkeit entweder zu den Waschstellen an der Frontscheibe oder zu den Waschstellen an den Scheinwerferstreuscheiben eines Kraftfahrzeugs fördert. Die bekannte Pumpe läßt zwei Gehäuseteile erkennen. Die beiden Auslaßkanäle, die beiden Ventilsitze, die beiden Förderkammern der Dichtmembranen und die beiden Druckkanäle befinden sich in einem dieser Gehäuseteile, das dementsprechend kompliziert gebaut und schwierig herzustellen ist.

Der Erfindung liegt daher die Aufgabe zugrunde, eine Doppelförderpumpe zu entwickeln, die einfach aufgebaut ist und deren Teile sich einfach herstellen lassen.

Diese Aufgabe wird erfindungsgemäß dadurch gelöst, daß bei einer Doppelförderpumpe mit den Merkmalen aus dem Oberbegriff des Anspruchs 1 die Dichtmembranen nebeneinander jeweils in einer Trennebene eines zweiteiligen Gehäuses angeordnet sind und sich in jeder Gehäusehälfte, zur einen Dichtmembran gehörend, ein Auslaßkanal und eine vordere Kammer mit Ventilsitz, eine zur anderen Dichtmembran gehörende hintere Kammer und ein Druckkanal zwischen der vorderen und der hinteren Kammer befinden. Die wasserführenden Kammern und Kanäle einer erfindungsgemäßen Doppelförderpumpe sind also gleichmäßig auf beide Teile eines zweiteiligen Gehäuses, in dessen Trennebene die Dichtmembranen angeordnet sind, verteilt. Die Form der beiden Gehäuseteile kann deshalb relativ einfach sein, so daß sich diese Gehäuseteile leicht herstellen lassen.

Vorteilhafte Ausgestaltungen einer erfindungsgemäßen Doppelförderpumpe kann man den Unteransprüchen entnehmen.

Als Förderpumpen für die Waschflüssigkeit werden in Kraftfahrzeugen meist sogenannte Kreiselpumpen verwendet, bei denen sich in einer Förderkammer ein von einem Elektromotor angetriebenes Laufrad dreht, das die Flüssigkeit durch einen zentralen Stutzen ansaugt und bei einer Doppelförderpumpe in zwei von der Förderkammer ausgehende Förderkanäle drückt. Je nach Drehrichtung des Laufrads ist der Druck in dem einen Förderkanal höher als in dem anderen bzw. umgekehrt. Nach Anspruch 3 mündet nun mindestens einer der zwei Förderkanäle in das vordere, einer Dichtmembran zugeordnete Abteil. Gemäß Anspruch 4 kann auch mindestens einer der beiden Förderkanäle in das hintere, einer Dichtmembran zugeordneten Abteil münden. Bevorzugt wird dabei jeweils eine Ausführung, bei der sich gemäß Anspruch 5 der eine Förderkanal in der einen und der andere Förderkanal in der anderen Gehäusehälfte befindet.

Ein besonders einfacher Aufbau und wenig Abdichtprobleme ergeben sich, wenn gemäß Anspruch 6 ein Auslaßkanal als Druckkanal dient. Dieser Auslaßkanal verläuft dann, ausgehend von dem vorderen Abteil der einen Dichtmembran, vorteilhafterweise in Richtung zur zweiten Dichtmembran und ist dort zum hinteren Abteil der zweiten Dichtmembran offen.

Eine einfache Form einer Gehäusehälfte erhält man auch dann, wenn gemäß Anspruch 10 ein Druckkanal als zur Trennfläche offene Rinne dieser Gehäusehälfte ausgebildet ist. Sind beide Druckkanäle zur Trennfläche hin offene Rinnen, so kann man sie zur gegenseitigen Abdichtung seitlich zueinander versetzen.

Ein Druckkanal kann auch von einem Förderkanal ausgehen.

Die Handhabung und Montage der beiden Dichtmembranen wird dadurch vereinfacht, daß diese gemäß Anspruch 13 über ein Zwischenstück einstückig miteinander verbunden sind. Überschneiden sich die beiden Druckkanäle ganz oder teilweise, so kann das die beiden Dichtmembranen miteinander verbindende Zwischenstück zugleich dazu ausgenutzt werden, die beiden Druckkanäle voneinander zu trennen.

Nach Anspruch 15 sind die Dichtmembranen, die Abteile, die Förderkanäle und die Auslaßkanäle zweizählig achsensymmetrisch angeordnet. Daraus folgt, daß in der einen Drehrichtung der Pumpe die Druckverhältnisse an der einen Membran dieselben sind wie in der anderen Drehrichtung der Pumpe an der anderen Membran. Durch unterschiedliche Anordnung der Kanäle bezüglich der beiden Dichtmembranen kann man dafür sorgen, daß die Druckverhältnisse an den beiden Dichtmembranen verschieden werden.

Es kann günstig sein, wenn die beiden Förderkanäle auf etwa der gleichen Höhe von der Förderkammer ausgehen. Damit sie dann nicht schräg verlaufen müssen, ist es zweckmäßig, wenn die beiden Förderkanäle nach Anspruch 19 wenigstens annähernd in derselben Ebene in zwei Abteile an den Dichtmembranen münden. Sollen dann beide Förderkanäle in ein vorderes oder in ein hinteres Abteil münden, so sind die beiden Dichtmembranen vorteilhafterweise in einer senkrecht auf ihnen stehenden Richtung derart gegeneinander versetzt, daß sich die beiden vorderen Abteile oder die beiden hinteren Abteile wenigstens annähernd auf gleicher Höhe befinden. Zwischen den Dichtmembranen kann sich dann in den beiden Gehäusehälften eine Stufe oder eine Schräge befinden.

Mehrere Ausführungsbeispiele einer erfindungsgemäßen Doppelförderpumpe sowie eine elektrische Schaltung zum Betrieb einer solchen Pumpe sind in den Zeichnungen dargestellt. Anhand der Fig. dieser Zeichnungen wird die Erfindung nun näher erläutert.

Es zeigen
- Fig. 1: einen Längsschnitt durch das erste Ausführungsbeispiel,
- Fig. 2: eine Ansicht der Pumpe nach Fig. 1 in Richtung des Pfeils A,
- Fig. 3: einen Schnitt entlang der Linie III-III aus Fig. 2,
- Fig. 4: einen Schnitt entlang der Linie IV-IV aus Fig. 2,
- Fig. 5: eine Innenansicht des einen Gehäuseteils,
- Fig. 6: in einem Schnitt entsprechend dem aus Fig. 3 ein zweites Ausführungsbeispiel, bei dem die hinteren Abteile der Dichtmembranen die Auslaßkanäle nur tangential anschneiden,
- Fig. 7: die Innenansicht der einer Gehäusehälfte eines dritten Ausführungsbeispiels, bei dem ein Auslaßkanal als Druckkanal dient und ein zusätzlicher Druckkanal vorhanden ist,
- Fig. 8: einen Schnitt entlang der Linie VIII-VIII aus Fig. 7,
- Fig. 9: in Innenansicht eine Gehäusehälfte eines vierten Ausführungsbeispiels, bei dem die hinteren und vorderen Abteile der Dichtmembranen über seitlich versetzte Druckkanäle miteinander verbunden sind,
- Fig. 10: einen Schnitt entlang der Linie X-X aus Fig. 9,
- Fig. 11: einen Schnitt entlang der Linie XI-XI aus Fig. 9,
- Fig. 12: in Innenansicht die eine Gehäusehälfte eines fünften Ausführungsbeispiels, bei dem die Druckkanäle von den Förderkanälen ausgehen, sich schneiden und durch ein Zwischenstück den Dichtmembranen voneinander getrennt sind,
- Fig. 13: einen Schnitt entlang der Linie XIII-XIII aus Fig. 12,
- Fig. 14: in Innenansicht die eine Gehäusehälfte eines sechsten Ausführungsbeispiels, bei dem die übereinander liegenden Druckkanäle durch ein Zwischenstück zwischen den beiden Dichtmembranen voneinander getrennt sind,
- Fig. 15: einen Schnitt entlang der Linie XV-XV aus Fig. 14,
- Fig. 16: in Ansicht die beiden einstückig mit einem Zwischenstück ausgebildeten Dichtmembranen des sechsten Ausführungsbeispiels und
- Fig. 17: in einem Schnitt ähnlich dem aus Fig. 3 ein siebtes Ausführungsbeispiel, bei dem die beiden Dichtmembranen in einer senkrecht auf ihnen stehenden Richtung gegeneinander versetzt sind.

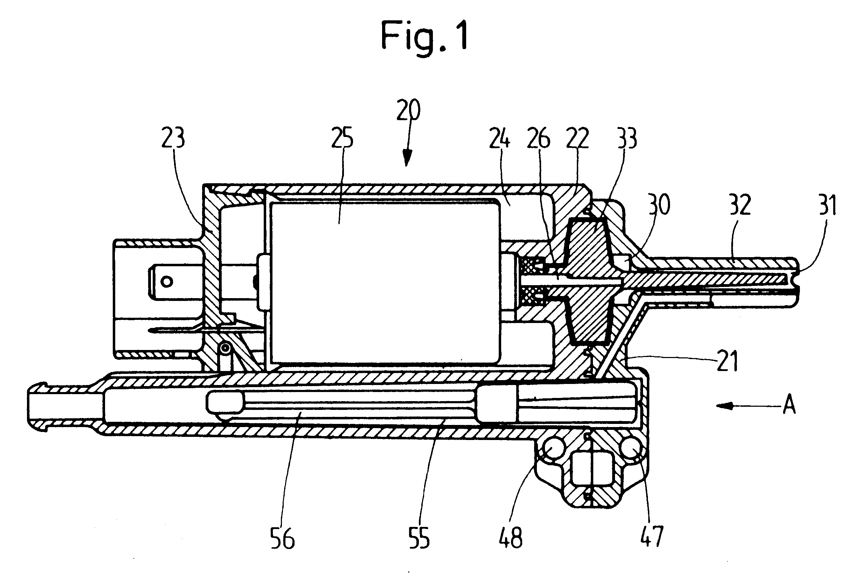

Das Gehäuse 20 der in Fig. 1 gezeigten Waschpumpe für die Scheibenwaschanlage eines Kraftfahrzeugs weist ein plattenartiges Unterteil 21 und ein becherförmiges Oberteil 22 auf, das an der dem Unterteil 21 gegenüberliegenden Seite durch einen Deckel 23 verschlossen ist. In eine hohlzylindrische Aufnahme 24 des Oberteils 22 ist ein kleiner elektrischer Motor 25 eingesetzt, der mit seine Motorwelle 26 durch den Boden des Oberteils 22 hindurch in eine durch das Unterteil 21 und das Oberteil 22 gebildete Förderkammer 30 hineinragt. In der Förderkammer mündet zentral ein Saugkanal 31, der durch einen an das Unterteil 21 einstückig angeformten Saugstutzen 32 hindurch verläuft. In der Förderkammer 30 befindet sich ein Laufrad 33, das verdrehsicher auf der Motorwelle 26 befestigt ist.

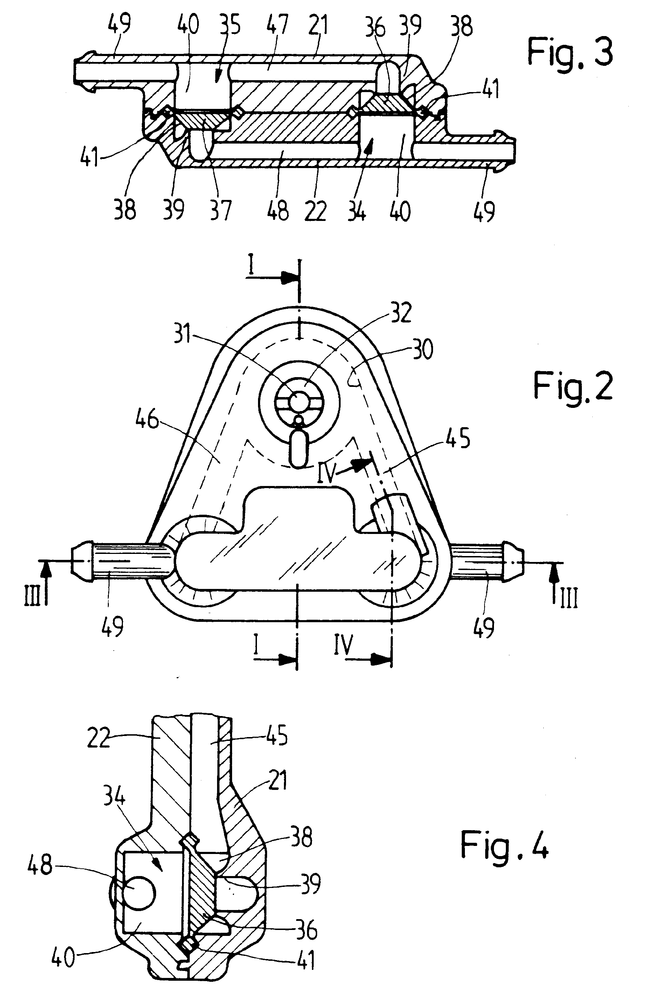

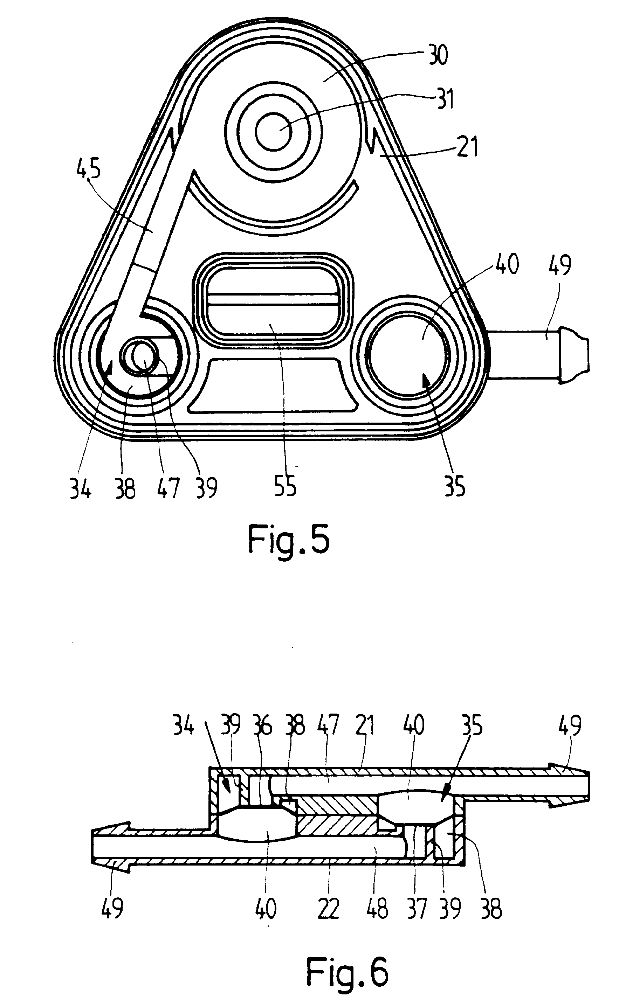

Wie man deutlich aus den Fig. 2 und 5 ersieht, bilden das Unterteil 21 und das Oberteil 22 zusammen zwei seitlich der Förderkammer 30 und in einer Ebene senkrecht zur Achse der Förderkammer nebeneinander liegende Ventilkammern 34 und 35. Jede Ventilkammer wird von einer Dichtmembran 36 bzw. 37 in ein vorderes Abteil 38 mit einem Ventilsitz 39 und in ein hinteres Abteil 40 getrennt, wobei sich vorderes Abteil 38 und hinteres Abteil 40 in Richtung der Achse der Förderkammer 30 hintereinander befinden. Im Ruhezustand der Pumpe liegen die Dichtmembranen 36 und 37 aufgrund einer Eigenvorspannung auf den Ventilsitzen 39 auf.

Aus den Fig. 3 und 4 geht deutlich hervor, daß die Dichtmembranen 36 und 37 mit einem Ringwulst 41 zwischen dem Unterteil 21 und dem Oberteil 22 des Gehäuses 20 eingespannt sind, daß sie also nebeneinander in der Trennfläche eines zweiteiligen Gehäuses angeordnet sind. Man ersieht weiterhin aus Fig. 3, daß sich das vordere Abteil 38 der Ventilkammer 34 und das hintere Abteil 40 der Ventilkammer 35 im Unterteil 21 und das vordere Abteil 38 der Ventilkammer 35 und das hintere Abteil 40 der Ventilkammer 34 im Oberteil 22 des Gehäuses befinden, wobei die Abteile jeweils zur Trennfläche zwischen Unterteil und Oberteil hin offen sind.

Auf zwei unterschiedlichen Höhen und tangential in entgegengesetzte Richtungen gehen von der Förderkammer 30 zwei gerade Förderkanäle 45 und 46 aus, von denen der Förderkanal 45 im Unterteil 21 verläuft und in das vordere Abteil 38 der Ventilkammer 34 mündet und der Förderkanal 46 im Oberteil 22 verläuft und in das vordere Abteil der Ventilkammer 35 mündet. Beide Förderkanäle 45 und 46 sind zur Trennebene des jeweiligen Teils 21 bzw. 22 hin offen und werden beim Zusammenbau von Unterteil 21 und Oberteil 22 abgedeckt, wie man dies für den Kanal 45 aus Fig. 4 ersieht.

Von einem Ventilsitz 39, also von einem vorderen Abteil 38 einer Ventilkammer 34 bzw. 35 geht jeweils ein gerader Auslaßkanal 47 bzw. 48 aus, der im Abstand zur Trennfläche zwischen Unterteil 21 und Oberteil 22 und parallel zu dieser von der einen Ventilkammer in Richtung auf die andere Ventilkammer zu verläuft und sich mit einem Anschlußstutzen 49 über diese andere Ventilkammer hinaus erstreckt. Zu jeder Gehäusehälfte 21 bzw. 22 gehört also auch ein Auslaßkanal 47 bzw. 48. Der Auslaßkanal 47 ist zum hinteren Abteil 40 der Ventilkammer 35 und der Auslaßkanal 48 zum hinteren Abteil 40 der Ventilkammer 34 hin offen, und zwar sind die hinteren Abteile so tief, daß sie die Kanäle 47 bzw. 48 vollständig unterbrechen. Die Kanäle 47 und 48 münden also quasi in die hinteren Abteile ein und beginnen jenseits des Mündungsbereichs neu.

Bei ausgeschaltetem Elektromotor 25 liegen die Dichtmembranen 36 und 37 auf den Ventilsitzen 39 auf und verhindern dadurch, daß sich die Auslaßkanäle in den Waschwasserbehälter entleeren bzw. daß der Waschwasserbehälter durch eine Waschstelle, die sich auf einem niedrigeren Niveau befindet als er, entleert wird. Wird nun der Elektromotor 25 eingeschaltet, so stehen in den beiden Förderkanälen 45 und 46 unterschiedlich hohe Drücke an, die beide ausreichen würden, um die Dichtmembranen 36 und 37 von den Ventilsitzen 39 abzuheben. Der beispielsweise in dem Förderkanal 45 anstehende höhere Druck, durch den die Dichtmembran 36 von ihrem Ventilsitz 39 abgehoben wird, pflanzt sich jedoch über den Auslaßkanal 47 in das hintere Abteil 40 der Ventilkammer 35 fort und wirkt dort entgegen dem im vorderen Abteil 38 der Ventilkammer 35 anstehenden niedrigeren Druck des Förderkanals 46 auf die Dichtmembran 37. Diese wird dadurch auf ihrem Ventilsitz 39 gehalten. Über den Auslaßkanal 48 wird somit keine Waschflüssigkeit gefördert. Zusätzlich wird die Dichtmembran 37 dadurch sicher geschlossen gehalten, daß die Fläche an ihr, die dem in dem hinteren Abteil 40 anstehenden Schließdruck ausgesetzt ist, größer ist als die Fläche, die dem im vorderen Abteil anstehenden und niedrigeren Öffnungsdruck ausgesetzt ist. An der vom Ventilsitz 39 umschlossenen Fläche kann der Öffnungsdruck nämlich nicht angreifen.

Wird der Elektromotor 25 in umgekehrter Richtung gepolt an Spannung angeschlossen, so dreht sich das Laufrad 33 in umgekehrter Richtung und der Förderdruck im Förderkanal 46 ist höher als im Förderkanal 45. Es wird nun Waschflüssigkeit nur durch den Auslaßkanal 48 gefördert.

Bei der Pumpe nach den Fig. 1 bis 5 wird durch das Unterteil 21 und das Oberteil 22 noch eine Schwimmerkammer 55 gebildet, in der sich der Schwimmer 56 eines Füllstandssensors für die Waschflüssigkeit bewegen kann. Die Schwimmerkammer erstreckt sich längs der Aufnahme 24 für den Elektromotor 25 und befindet sich im Bereich des Unterteils 21 und des Bodens des Oberteils 22 in dem Raum zwischen der Förderkammer 30 und den beiden Ventilkammern 34 und 35, wie die Fig. 5 deutlich zeigt, als in den Ecken eines Dreiecks angeordnet ansehen kann. Auf diese Weise wird für die Schwimmerkammer 55 nur wenig zusätzlicher Platz beansprucht.

Die Ausführung nach Fig. 6 entspricht in ihrem konstruktiven Aufbau weitgehend der eben beschriebenen Förderpumpe. Anders als bei der Ausführung nach den Fig. 1 bis 5 ist nun jedoch die Höhe der hinteren Abteile 40 der Ventilkammern 34 und 35 reduziert, so daß diese Abteile die Auslaßkanäle 47 und 48 lediglich auf einer Höhe, die etwa dem halben Radius eines Auslaßkanals entspricht, tangential anschneiden. Der Querschnitt der Auslaßkanäle 47 und 48 bleibt also auch im Bereich der hinteren Abteile 40 weitgehend erhalten, so daß die Waschflüssigkeit auch dort laminar strömt.

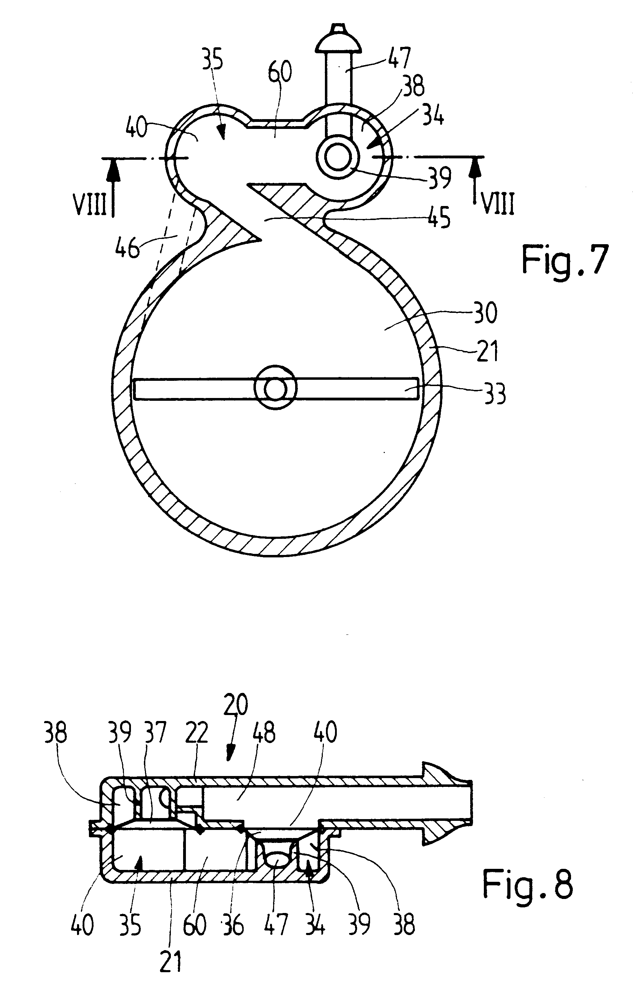

Während bei den beiden bisher beschriebenen Ausführungsbeispielen die Anordnung der Förderkanäle, der Druckkanäle und der Auslaßkanäle bezüglich der beiden Dichtmembranen gleicht ist, zeigen die Fig. 7 und 8 eine Ausführung, bei der diese Anordnung bezüglich der einen Dichtmembran eine andere ist als bezüglich der anderen Dichtmembran. Das Gehäuse 20 dieser Ausführung weist wiederum ein Unterteil 21 und ein Oberteil 22 auf, zwischen denen die zwei Dichtmembranen 36 und 37 eingespannt sind, die bei ausgeschalteter Pumpe aufgrund einer Eigenvorspannung auf den Ventilsitzen 39 aufliegen. Von dem vorderen Abteil 38 der Ventilkammer 35, das im Oberteil 22 ausgebildet ist, geht ähnlich wie bei den beiden bereits beschriebenen Ausführungen parallel zur Trennfläche zwischen Unterteil 21 und Oberteil 22 ein Auslaßkanal 48 in Richtung auf die Dichtmembran 36 ab, der zum hinteren Abteil 40 der Ventilkammer 34 hin, in der sich die Dichtmembran 36 befindet, offen ist. Der Auslaßkanal 48 dient also als Druckkanal zwischen dem vorderen Abteil 38 der Ventilkammer 35 und dem hinteren Abteil 40 der Ventilkammer 34. Hinsichtlich des Oberteils 22 stimmt die Ausführung nach den Fig. 7 und 8 also noch mit den Ausführungen nach den Fig. 1 bis 6 überein.

Der Auslaßkanal 47 im Unterteil 21 erstreckt sich nun jedoch nicht in Richtung auf die Ventilkammer 35 zu, sondern geht vom Ventilsitz 39 senkrecht zu dieser Richtung und senkrecht zum Auslaßkanal 48 ab.

Das vordere Abteil 38 der Ventilkammer 34 und das hintere Abteil 40 der Ventilkammer 35 sind unabhängig vom Auslaßkanal 47 über einen Druckkanal 60 miteinander verbunden, der sich ganz im Unterteil 21 befindet, zur Trennfläche zwischen Unterteil 21 und Oberteil 22 hin offen ist und nach dem Zusammenbau der beiden Teile durch das Oberteil 22 verschlossen ist.

Anhand der Fig. 7 erkennt man, daß nicht nur die Druckkanäle, sondern auch die von der Förderkammer 30 ausgehenden Förderkanäle 45 und 46 bezüglich der beiden Dichtmembranen 36 und 37 unerschiedlich angeordnet sind, und zwar mündet der Förderkanal 45, der sich im Unterteil 21 befindet, in das hintere Abteil 40 der Ventilkammer 35. Der Förderkanal 46, der sich ganz im Oberteil 22 befindet und der deshalb in Fig. 7 nur gestrichelt angedeutet ist, mündet in das vordere Abteil 38 der Ventilkammer 35.

Dreht sich das Laufrad 33 in der Ansicht nach Fig. 7 entgegen dem Uhrzeigersinn, so ist der Druck im Förderkanal 45 höher als im Förderkanal 46. Dieser höhere Druck herrscht auch im hinterein Abteil der Ventilkammer 35 und hält die Dichtmembran 37 entgegen dem niedrigeren Druck im vorderen Abteil 38 auf dem Ventilsitz 39. Der Druck pflanzt sich über den Druckkanal 60 in das vordere Abteil 38 der Ventilkammer 34 fort und hebt die Dichtmembran 36 vom Ventilsitz 39 ab. Es wird somit Waschflüssigkeit durch den Auslaßkanal 47 gefördert.

Bei umgekehrter Drehrichtung des Laufrads 33 steht der höhere Druck in dem vorderen Abteil 38 der Ventilkammer 35 an. Die Dichtmembran 37 wird vom Ventilsitz 39 abgehoben, so daß Wasser durch den Auslaßkanal 48 strömt und der höhere Druck in diesem Kanal die Dichtmembran 36 auf ihrem Ventilsitz 39 hält. Da bei einer Drehung des Laufrads 33 entgegen dem Uhrzeigersinn im Auslaßkanal 48 kein Druck ansteht, wird bei der Ausführung nach den Fig. 7 und 8 die Dichtmembran 36 bei einer solchen Drehrichtung des Laufrads in jedem Fall vom Ventilsitz 39 abgehoben.

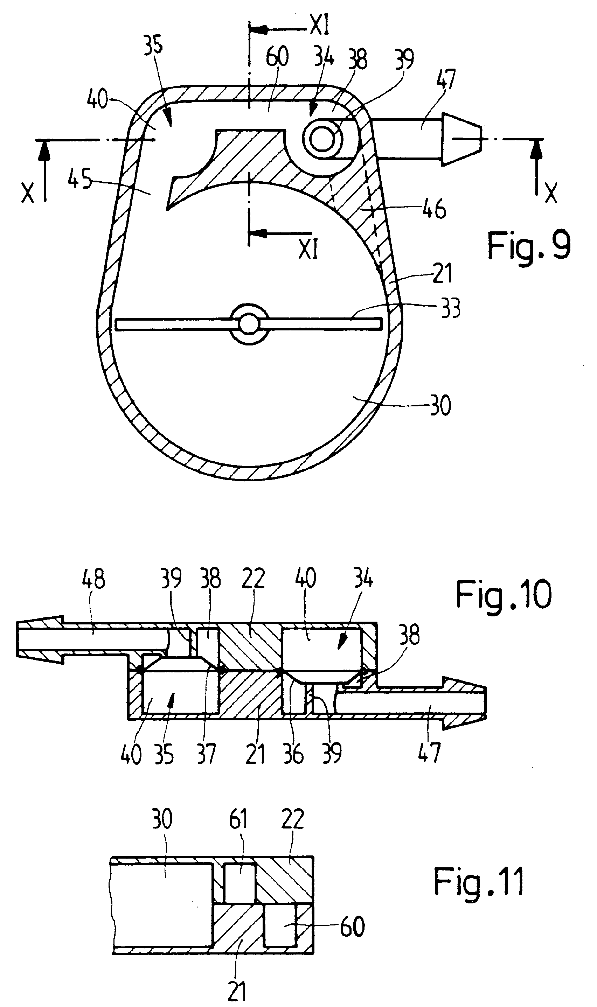

Bei der Ausführung nach den Fig. 9 bis 11 stehen die Auslaßkanäle 47 und 48 im Unterteil 21 bzw. im Oberteil 22 von der der jeweils anderen Ventilkammer abgewandten Seite der jeweiligen Gehäusehälfte von den Ventilsitzen 39 nach außen weg. Das sich in der einen Gehäusehälfte 21 bzw. 22 befindliche vordere Abteil 38 der einen Ventilkammer und das sich in dieser Gehäusehälfte befindliche hintere Abteil 40 der anderen Ventilkammer sind unabhängig von den Auslaßkanälen 47 und 48 über Druckkanäle 60 und 61 miteinander verbunden, die zwar zur Trennfläche der beiden Gehäusehälften hin offen sind, jedoch, wie deutlich aus Fig. 11 ersichtlich ist, seitlich derart gegeneinander versetzt sind, daß der Druckkanal der einen Gehäusehälfte durch die andere Gehäusehälfte verdeckt wird und keine Verbindung zwischen den Druckkanälen besteht.

Der Förderkanal 45 im Unterteil 21 führt von der Förderkammer 30 zum hinteren Abteil 40 der Ventilkammer 35 mit der Dichtmembran 37. Der sich im Oberteil 22 befindliche Förderkanal 46, der in Fig. 9 nur gestrichelt angedeutet ist, führt von der Förderkammer 30 in das hintere Abteil 40 der Ventilkammer 34 mit der Dichtmembran 36. Wenn sich das Laufrad 33 in der Ansicht nach Fig. 9 im Gegenuhrzeigersinn dreht, wird im Förderkanal 46 ein höherer Druck als im Förderkanal 45 erzeugt. Der höhere Druck pflanzt sich über das hintere Abteil 40 der Ventilkammer 34 und den Druckkanal 61 in das vordere Abteil 38 der Ventilkammer 35 fort. Der niedrigere Druck im Förderkanal 45 herrscht auch im hinteren Abteil 40 der Ventilkammer 35, im Druckkanal 60 und im vorderen Abteil der Ventilkammer 34. Dementsprechend öffnet die Dichtmembran 37 den Auslaßkanal 48, während die Dichtmembran 36 den Auslaßkanal 47 verschlossen hält. Bei einer Drehrichtung des Laufrads 33 im Uhrzeigersinn ist es umgekehrt.

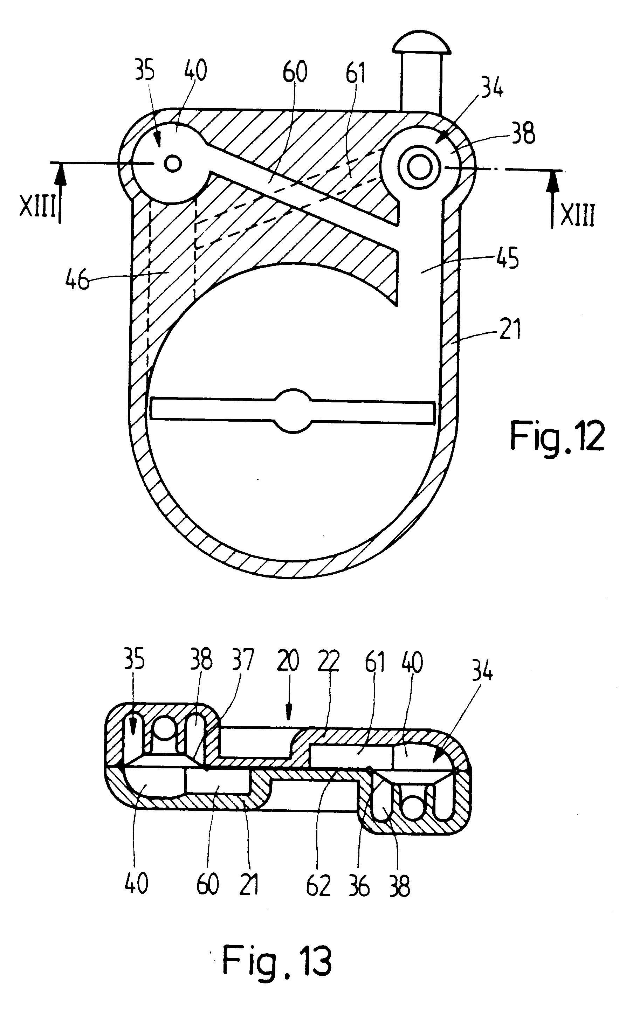

Bei der Ausführung nach den Fig. 12 und 13 mündet der Förderkanal 45 im Unterteil 21 in das vordere Abteil 38 der Ventilkammer 34. Der in Fig. 12 nur gestrichelt angedeutete Förderkanal 46 im Oberteil 22 mündet in das vordere Abteil 38 der Ventilkammer 35. Vom Förderkanal 45 geht ein Druckkanal 60 aus, der im Unterteil 21 zum hinteren Abteil 40 der Ventilkammer 35 führt. Der Förderkanal 46 ist mit dem hinteren Abteil der Ventilkammer 34 über einen in Fig. 12 ebenfalls nur gestrichelt angedeuteten Druckkanal 61 des Oberteils 22 verbunden.

Die beiden Druckkanäle 60 und 61 sind zur Trennfläche der beiden Gehäusehälften 21 und 22 hin offen und müssen deshalb in dem Bereich, in dem sie sich überschneiden, gegeneinander abgedichtet werden. Zu diesem Zweck sind die beiden Dichtmembranen 36 und 37 zusammen mit einem Zwischenstück 62 zu einem einzigen Bauteil zusammengefaßt. Das Zwischenstück liegt nach der Montage zwischen dem Unterteil 21 und dem Oberteil 22 des Gehäuses 20 und trennt die beiden sich überschneidenden Druckkanäle 60 und 61 voneinander.

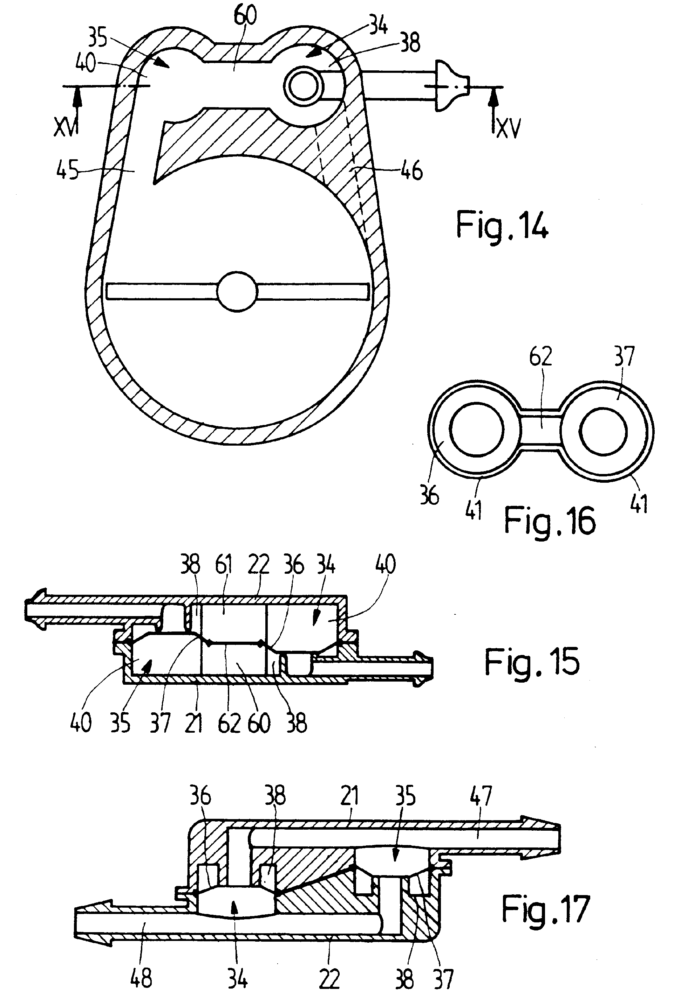

Die Fig. 14 bis 16 zeigen eine Ausführung, die derjenigen aus den Fig. 9 bis 11 sehr ähnlich ist. Die Förderkanäle 45 und 46 im Unterteil 21 bzw. Oberteil 22 münden in die hinteren Abteile 40 der Ventilkammer 34 und 35. Das hintere Abteil 40 der Ventilkammer 35 ist mit dem vorderen Abteil 38 der Ventilkammer 34 über einen Druckkanal 60, und das hintere Abteil der Ventilsitz 34 ist mit dem vorderen Abteil 38 der Ventilkammer 35 über einen Druckkanal 61 verbunden. Die beiden jeweils zur Trennfläche der beiden Gehäusehälften 21 und 22 offenen Druckkanäle 60 und 61 sind nun jedoch nicht wie bei der Ausführung nach den Fig. 9 bis 11 seitlich gegeneinander versetzt, sondern verlaufen genau übereinander. Ein Zwischenstück 62 zwischen den beiden Dichtmembranen 36 und 37 verbindet diese beiden zu einem einzigen Bauteil und trennt nach der Montage die beiden Druckkanäle 60 und 61 voneinander.

Bei den bisher beschriebenen Ausführugen liegen die beiden Dichtmembranen 36 und 37 mit ihrem Ringwulst 41 in einer gemeinsamen Ebene. Die Förderkanäle 45 und 46 gehen, in axialer Richtung der Förderkammer 30 und der Ventilkammern 34 und 35 betrachtet, auf verschiedenen Höhen von der Förderkammer 30 aus und münden auf verschiedenen Höhen in die Ventilkammern 34 und 35.

Bei der Ausführung nach Fig. 17, bei der nun wiederum die Auslaßkanäle 47 und 48 als Druckkanäle verwendet werden, sind die beiden Ventilkammern 34 und 35 und die sich in ihnen befindenden Dichtmembranen 36 und 37 in Achsrichtung derart gegeneinander versetzt, daß sich die vorderen Abteile 38 der beiden Ventilkammern auf gleicher Höhe befinden. Die Trennfläche zwischen den beiden Gehäuseteilen 21 und 22 geht zwischen den beiden Ventilkammern 34 und 35 in einer Schräge auf die verschiedenen Niveaus über. Denkbar ist auch ein stufiger übergang, jedoch ist dann die dichte Verbindung der beiden Gehäuseteile, z. B. durch Ultraschallschweißen, schwieriger. Die beiden in Fig. 17 nicht näher dargestellten Förderkanäle 45 und 46 münden nun auf gleicher Höhe in die vorderen Abteile 38 der Ventilkammern 34 und 35 und können deshalb auch leicht auf gleicher Höhe von der Förderkammer 30 ausgehen.

## Patentansprüche

1. Doppelförderpumpe, insbesondere für Scheibenwaschanlagen in Kraftfahrzeugen, mit zwei wahlweise je nach Drehrichtung eines Förderelements mit Flüssigkeit beaufschlagbaren Auslaßkanälen (47, 48), mit zwei beweglichen Dichtmembranen (36, 37), von denen jeweils eine einem Auslaßkanal (47, 48) zugeordnet ist und eine Ventilkammer (34, 35) in ein vorderes Abteil (38) mit Ventilsitz (39) und ein hinteres Abteil (40) trennt, wobei jeweils ein vorderes Abteil (38) der einen Ventilkammer (34, 35) und ein hinteres Abteil (40) der anderen Ventilkammer (35, 34) über einen Druckkanal (47, 48; 60, 61) miteinander verbunden sind, dadurch gekennzeichnet, daß die Dichtmembranen (34, 35) nebeneinander jeweils in einer Trennfläche eines zweiteiligen Gehäuses (20) angeordnet sind und daß sich in jeder Gehäusehälfte (21, 22), zur einen Dichtmembran (34, 35) gehörend, ein Auslaßkanal (47, 48) und ein vorderes Abteil (38) mit Ventilsitz (39), ein zur anderen Dichtmembran (35, 34) gehörendes hinteres Abteil (40) und ein Druckkanal (60, 61) zwischen dem vorderen und dem hinteren Abteil (38, 40) befinden.

2. Doppelförderpumpe nach Anspruch 1, dadurch gekennzeichnet, daß sich mindestens einer der Ventilsitze (39) an einem Auslaßkanal (47, 48) befindet.

3. Doppelförderpumpe nach Anspruch 1 oder 2, dadurch gekennzeichnet, daß mindestens einer von zwei von einer Förderkammer (30), in der sich das Förderelement (33) befindet, ausgehenden Förderkanälen (45, 46) in das vordere Abteil (38) einer Ventilkammer (34, 35) mündet.

4. Doppelförderpumpe nach Anspruch 1, 2 oder 3, dadurch gekennzeichnet, daß mindestens einer von zwei von einer Förderkammer (30), in der sich das Förderelement (33) befindet, ausgehenden Förderkanälen (45, 46) in das hintere Abteil (40) einer Ventilkammer (34, 35) mündet.

5. Doppelförderpumpe nach Anspruch 3 oder 4, dadurch gekennzeichnet, daß sich der eine Förderkanal (45) in der einen Gehäusehälfte (21) und der andere Förderkanal (46) in der anderen Gehäusehälfte (22) befindet.

6. Doppelförderpumpe nach einen der vorhergehenden Ansprüche, dadurch gekennzeichnet, daß ein Auslaßkanal (47, 48) als Druckkanal dient.

7. Doppelförderpumpe nach Anspruch 6, dadurch gekennzeichnet, daß der Auslaßkanal (47, 48) ausgehend von dem vorderen Abteil (38) der einen Ventilkammer (34, 35) in Richtung zur zweiten Ventilkammer (35, 34) verläuft und dort zum hinteren Abteil (40) der zweiten Ventilkammer (35, 34) hin offen ist.

8. Doppelförderpumpe nach Anspruch 7, dadurch gekennzeichnet, daß das hintere Abteil (38) den Auslaßkanal (47, 48) nur tangential anschneidet.

9. Doppelförderpumpe nach einem der Ansprüche 6 bis 8, dadurch gekennzeichnet, daß er Auslaßkanal (47, 48) parallel zu einer Trennfläche der beiden Gehäusehälften (21, 22) verläuft.

10. Doppelförderpumpe nach einem der Ansprüche 1 bis 5, dadurch gekennzeichnet, daß mindestens ein Druckkanal (60, 61) als zur Trennfläche offene Rinne der einen Gehäusehälfte (21, 22) ausgebildet ist.

11. Doppelförderpumpe nach Anspruch 10, dadurch gekennzeichnet, daß zwei als zur Trennfläche hin offene Rinnen ausgebildete Druckkanäle (60, 61) seitlich zueinander versetzt sind.

12. Doppelförderpumpe nach einem vorhergehenden Anspruch, dadurch gekennzeichnet, daß ein Druckkanal (60, 61) von einem Förderkanal (45, 46) ausgeht.

13. Doppelförderpumpe nach einem vorhergehenden Anspruch, dadurch gekennzeichnet, daß die beiden Dichtmembranen (36, 37) über ein Zwischenstück (62) einstückig miteinander verbunden sind.

14. Doppelförderpumpe nach Anspruch 13, dadurch gekennzeichnet, daß sich die beiden Druckkanäle (60, 61) wenigstens bereichsweise überschneiden und durch das die beiden Dichtmembranen (36, 37) miteinander verbindende Zwischenstück (62) voneinander getrennt sind.

15. Doppelförderpumpe nach einem vorhergehenden Anspruch, dadurch gekennzeichnet, daß die Dichtmembranen (36, 37), die Kammern (30, 34, 35), die Förderkanäle (45, 46) und die Auslaßkanäle (47, 48) zweizählig achsensymmetrisch angeordnet sind.

16. Doppelförderpumpe nach einem der Ansprüche 1 bis 14, dadurch gekennzeichnet, daß die Anordnung der Förderkanäle (45, 46) und/oder die der Druckkanäle (48, 60) und/oder die der Auslaßkanäle (47, 48) bezüglich der einen Dichtmembran (36) eine andere ist als bezüglich der anderen Dichtmembran (37).

17. Doppelförderpumpe nach Anspruch 16, dadurch gekennzeichnet, daß der eine von zwei von der das Förderelement (33) enthaltenden Förderkammer (30) ausgehenden Förderkanälen (45, 46) in das vordere Abteil (38) und der andere in das hintere Abteil (40) derselben Ventilkammer (35) mündet.

18. Doppelförderpumpe nach Anspruch 16 oder 17, dadurch gekennzeichnet, daß das hintere Abteil (40) einer ersten Ventilkammer (34) über einen Auslaßkanal (48) und das hintere Abteil (40) der zweiten Ventilkammer (35) über einen separaten Druckkanal (60) mit dem vorderen Abteil (38) der jeweils anderen Ventilkammer (35, 34) verbunden ist.

19. Doppelförderpumpe nach einem vorhergehenden Anspruch, dadurch gekennzeichnet, daß die beiden von der das Förderelement (33) enthaltenden Förderkammer (30) ausgehenden Förderkanäle (45, 46) wenigstens annähernd in derselben Ebene in zwei Abteile (38) münden.

20. Doppelförderpumpe nach Anspruch 19, dadurch gekennzeichnet, daß die beiden Dichtmembranen (36, 37) in einer senkrecht auf ihnen stehenden Richtung derart gegeneinander versetzt sind, daß sich die beiden vorderen Abteile (38) oder die beiden hinteren Abteile (40) wenigstens annähernd auf gleicher Höhe befinden und daß die beiden Förderkanäle (45, 46) in die sich auf gleicher Höhe befindenden Abteile (38) münden.

21. Doppelförderpumpe nach einem vorhergehenden Anspruch, dadurch gekennzeichnet, daß wenigstens eine der beiden Dichtmembranen (36, 37) im Ruhezustand aufgrund einer Eigenvorspannung auf dem Ventilsitz (39) aufliegt.

22. Doppelförderpumpe nach Anspruch 21, dadurch gekennzeichnet, daß die Fläche an der Dichtmembran (36, 37), die dem Schließdruck ausgesetzt ist, größer ist als die Fläche, die dem Öffnungsdruck ausgesetzt ist.

## Claims

1. A double feed pump, especially for windshield washer systems in motor vehicles, comprising two outlet channels (47, 48) selectively acted upon with liquid in accordance with the direction of rotation of a feed element, comprising two movable sealing membranes (36, 37) of which one each is assigned to an outlet channel (47, 48) and divides a valve chamber (34, 35) into a front compartment (38) with valve seat (39) and into a rear compartment (40) and one each of the front compartments (38) of one valve chamber (34, 35) and a rear compartment (40) of the other valve chamber (35, 34) are connected with each other through a pressure channel (47, 48; 60, 61), wherein the sealing membranes (34, 35) are arranged one beside the other in a parting plane each of a two-part housing (20) and wherein in each housing half (21, 22), assigned to one sealing membrane (34, 35), are positioned an outlet channel (47, 48) and a front compartment (38) with valve seat (39) and, assigned to the other sealing membrane (35, 34), a rear compartment (40) and, between the front and rear compartments (38, 40), a pressure channel (60, 61).

2. A double feed pump according to claim 1, wherein at least one of the valve seats (39) is positioned on an outlet channel (47, 48).

3. A double feed pump according to claim 1 or 2, wherein, branched off from a delivery chamber (30) in which the feed element (33) is located, at least one of two delivery channels (45, 46) opens into the front compartment (38) of a valve chamber (34, 35).

4. A double feed pump according to claim 1, 2 or 3, wherein, branched off from a delivery chamber (30) in which the feed element (33) is located, at least one of two delivery channels (45, 46) opens into the rear compartment (40) of a valve chamber (34, 35).

5. A double feed pump according to claim 3 or 4, wherein one delivery channel (45) is positioned in one housing haft (21) and the other delivery channel (46) in the other housing half (22).

6. A double feed pump according to one of the preceding claims, wherein an outlet channel (47, 48) serves as a pressure channel.

7. A double feed pump according to claim 6, wherein the outlet channel (47, 48), branched off from the front compartment (38) of one valve chamber (34, 35), extends in a direction towards the second valve chamber (35, 34) and is there open towards the rear compartment (40) of the second valve chamber (35 , 34).

8. A double feed pump according to claim 7, wherein the rear compartment (38) cuts the outlet channel (47, 48) only tangentially.

9. A double feed pump according to one of claims 6 to 8, wherein the outlet channel (47, 48) extends in parallel to a parting plane of the two housing halves (21, 22).

10. A double feed pump according to one of claims 1 to 5, wherein at least one pressure channel (60, 61) is formed as a duct of one housing half (21, 22), which duct is open towards the parting plane.

11. A double feed pump according to claim 10, wherein two pressure channels (60, 61) are formed as ducts open towards the parting plane and are laterally set off relative to each other.

12. A double feed pump according to one of the preceding claims, wherein a pressure channel (60, 61) is branched off from a delivery channel (45, 46).

13. A double feed pump according to one of the preceding claims, wherein the two sealing membranes (36, 37) are integrally connected through a transition piece (62).

14. A double feed pump according to claim 13, wherein the two pressure channels (60, 61) intersect at least in sections and are separated from each other by the transition piece (62) connecting the two sealing membranes (36, 37) with each other.

15. A double feed pump according to one of the preceding claims, wherein the sealing membranes (36, 37), the chambers (30, 34, 35), the delivery channels (45, 46) and the outlet channels (47, 48) are axially symmetrically arranged in pairs.

16. A double feed pump according to one of claims 1 to 14, wherein the arrangement of delivery channels (45, 46) and/or pressure channels (48, 60) and/or outlet channels (47, 48) with regard to one sealing membrane (36) is different from that with regard to the other sealing membrane (37).

17. A double feed pump according to claim 16, wherein one of two delivery channels (45, 46) branched off from the delivery chamber (30) including the feed element (33) opens into the front compartment (38) and the other one into the rear compartment (40) of the same valve chamber (35).

18. A double feed pump according to claim 16 or 17, wherein, through an outlet channel (48), the rear compartment (40) of a first valve chamber (34) and, through a separate pressure channel (60), the rear compartment (40) of the second valve chamber (35) are connected with the front compartment (38) of the respective other valve chamber (35, 34).

19. A double feed pump according to one of the preceding claims, wherein the two delivery channels (45, 46) branched off from the delivery chamber (30) including the feed element (33) open into two portions (38) in at least substantially the same plane.

20. A double feed pump according to claim 19, wherein the two sealing membranes (36, 37) set off in a direction standing perpendicularly on themselves in such a way that the two front compartments (38) or the two rear compartments (40) are at least substantially positioned at the same level and that the two delivery channels (45, 46) open into the portions (38) positioned at the same level.

21. A double feed pump according to one of the preceding claims, wherein in the rest condition at least one of the two sealing membranes (36, 37) rests against the valve seat (39) because of an internal prestress.

22. A double feed pump according to claim 21, wherein the surface of the sealing membrane (36, 37) exposed to the closing pressure is larger than the surface exposed to the opening pressure.

## Revendications

1. Pompe à double refoulement, notamment pour lave-glaces de véhicules automobiles, comprenant deux canaux de sortie (47, 48) pouvant être sélectivement alimentés en liquide selon le sens de rotation d'un élément de refoulement, deux membranes d'étanchéité mobile (36, 37), dont chacune est associée respectivement à un canal de sortie (47, 48) et divise une chambre de clapet (34, 35) en un compartiment avant (38) muni d'un siège de clapet (39), et un compartiment arrière (40), le compartiment avant (38) d'une chambre de clapet (34, 35) et le compartiment arrière (40) de l'autre chambre de clapet (35, 34) étant reliés l'un à l'autre par un canal de pression (47, 48 ; 60, 61), caractérisée en ce que les membranes d'étanchéité (36, 37) sont disposées l'une à côté de l'autre, chacune dans un plan de joint d'un corps (20) en deux parties, et en ce que, chaque demi-corps (21, 22) contient un canal de sortie (47, 48) et un compartiment avant (38) contenant un siège de clapet (39), qui appartiennent à une membrane d'étanchéité (36, 37), un compartiment arrière (40) appartenant à l'autre membrane d'étanchéité (37, 36), et un canal de pression (60, 61) situé entre le compartiment avant et le compartiment arrière (38, 40).

2. Pompe à double refoulement selon la revendication 1, caractérisée en ce qu'au moins un des sièges de clapets (39) se trouve au droit d'un canal de sortie (47, 48).

3. Pompe à double refoulement selon la revendication 1 ou 2, caractérisée en ce qu'au moins un de deux canaux de refoulement (45, 46) partant d'une chambre de refoulement (30) dans laquelle se trouve l'élément de refoulement (33) débouche dans le compartiment avant (38) d'une chambre de clapet (34, 35).

4. Pompe à double refoulement selon la revendication 1, 2 ou 3, caractérisée en ce qu'au moins un de deux canaux de refoulement (45, 46) partant d'une chambre de refoulement (30) dans laquelle se trouve l'élément de refoulement (33) débouche dans le compartiment arrière (40) d'une chambre de clapet (34, 35).

5. Pompe à double refoulement selon la revendication 3 ou 4, caractérisée en ce que l'un (45) des canaux de refoulement se trouve dans un (21) des demi-corps et l'autre (46) se trouve dans l'autre demi-corps (22).

6. Pompe à double refoulement selon une quelconque des revendications précédentes, caractérisée en ce qu'un canal de sortie (47, 48) sert de canal de pression.

7. Pompe à double refoulement selon la revendication 6, caractérisée en ce que le canal de sortie (47, 48) s'étend, à partir du compartiment avant (38) d'une chambre de clapet (34, 35) en direction de la deuxième chambre de clapet (35, 34) et, là, est ouvert sur le compartiment arrière (40) de la seconde chambre de clapet (35, 34).

8. Pompe à double refoulement selon la revendication 7, caractérisée en ce que le compartiment arrière (40) ne coupe le canal de sortie (47, 48) que tangentielement.

9. Pompe à double refoulement selon une des revendications 6 à 8, caractérisée en ce que le canal de sortie (47, 48) s'étend parallèlement à une surface de joint des deux demi-corps (21, 22).

10. Pompe à double refoulement selon une des revendications 1 à 5, caractérisée en ce qu'au moins un canal de pression (60, 61) est constitué par une rigole d'un demi-corps (21, 22) qui est ouverte sur la surface de joint.

11. Pompe à double refoulement selon la revendication 10, caractérisée en ce que deux canaux de pression (60, 61) constitués par des rigoles ouvertes sur la surface de joint sont décalés latéralement l'un par rapport à l'autre.

12. Pompe à double refoulement selon une revendication précédente, caractérisée en ce qu'un canal de pression (60, 61) part d'un canal de refoulement (45, 46).

13. Pompe à double refoulement selon une revendication précédente, caractérisée en ce que les deux membranes d'étanchéité (36, 37) sont réunies en un élément d'un seul tenant par une pièce intermédiaire (62).

14. Pompe à double refoulement selon la revendication 13, caractérisée en ce que les deux canaux de pression (60, 61) se recoupent au moins dans une certaine région et sont séparés l'un de l'autre par la pièce intermédiaire (62) qui réunit les deux membranes d'étanchéité (36, 37).

15. Pompe à double refoulement selon une revendication précédente, caractérisée en ce que les membranes d'étanchéité (36, 37), les chambres (30, 34, 35), les canaux de refoulement (45, 46) et les canaux de sortie (47, 48) sont placés par paires dans une disposition symétrique par rapport à un axe.

16. Pompe à double refoulement selon une des revendications 1 à 14, caractérisée en ce que la disposition des canaux de refoulement (45, 46) et/ou celle des canaux de pression (48, 60) et/ou celle des canaux de sortie (47, 48) par rapport à l'une (36) des membranes d'étanchéité est différente de la disposition par rapport à l'autre (37) des membranes d'étanchéité.

17. Pompe à double refoulement selon la revendication 16, caractérisée en ce qu'un de deux canaux de refoulement (45, 46) partant de la chambre de refoulement (30) qui renferme l'élément de refoulement (33) débouche dans le compartiment avant (38) et l'autre dans le compartiment arrière (40) de la même chambre de clapet.

18. Pompe à double refoulement selon la revendication 16 ou 17, caractérisée en ce que le compartiment arrière (40) d'une première chambre de clapet (34) et le compartiment arrière (40) de la seconde chambre de clapet (35) sont reliés chacun au compartiment avant (38) de l'autre chambre de clapet (35, 34) respective, le premier par un canal de sortie (48), et le second par un canal de pression (60) séparé.

19. Pompe à double refoulement selon une revendication précédente, caractérisée en ce que les deux canaux de refoulement (45, 46) qui partent de la chambre de refoulement (30) qui renferme l'élément de refoulement (33) débouchent dans deux compartiments (38), au moins à peu près dans le même plan.

20. Pompe à double refoulement selon la revendications 19, caractérisée en ce que les deux membranes d'étanchéité (36, 37) sont décalées l'une par rapport à l'autre dans une direction perpendiculaire à leur direction générale, de telle sorte que les deux compartiments avant (38) ou les deux compartiments arrière (40) se trouvent au moins approximativement à la même hauteur et en ce que les deux canaux de refoulement (45, 46) débouchent dans les compartiments (38) qui se trouvent à la même hauteur.

21. Pompe à double refoulement selon une revendication précédente, caractérisée en ce qu'au moins une des deux membranes d'étanchéité (36, 37) est appuyée sur le siège de clapet (39) à l'état de repos, en raison de sa propre précontrainte.

22. Pompe à double refoulement selon la revendication 21, caractérisée en ce que la surface de la membrane d'étanchéité (36, 37) qui est exposée à la pression de fermeture est plus grande que la surface qui est exposée à la pression d'ouverture.
